(19) Europäisches Patentamt
European Patent Office
Office européen des brevets

(11) **EP 4 300 630 A1**

(12) **EUROPEAN PATENT APPLICATION**
published in accordance with Art. 153(4) EPC

(43) Date of publication:
**03.01.2024 Bulletin 2024/01**

(21) Application number: **22759404.1**

(22) Date of filing: **10.02.2022**

(51) International Patent Classification (IPC):
***H01M 4/38*** *(2006.01)* ***H01M 4/485*** *(2010.01)*
***H01M 4/505*** *(2010.01)* ***H01M 4/525*** *(2010.01)*
***H01M 10/052*** *(2010.01)* ***H01M 10/0567*** *(2010.01)*

(52) Cooperative Patent Classification (CPC):
**H01M 4/38; H01M 4/485; H01M 4/505;**
**H01M 4/525; H01M 10/052; H01M 10/0567;**
Y02E 60/10

(86) International application number:
**PCT/JP2022/005485**

(87) International publication number:
**WO 2022/181365 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 JP 2021031146**

(71) Applicant: **Panasonic Intellectual Property Management Co., Ltd.**
**Kadoma-shi, Osaka 571-0057 (JP)**

(72) Inventors:
- **NAKATSUTSUMI Takayuki**
  **Kadoma-shi, Osaka 571-0057 (JP)**
- **DEGUCHI Masaki**
  **Kadoma-shi, Osaka 571-0057 (JP)**

(74) Representative: **Novagraaf International SA**
**Chemin de l'Echo 3**
**1213 Onex, Geneva (CH)**

(54) **NONAQUEOUS SECONDARY BATTERY**

(57) A non-aqueous secondary battery including a positive electrode including a lithium-transition metal composite oxide containing at least nickel as a transition metal, a negative electrode including a silicon-containing material, a separator interposed between the positive electrode and the negative electrode, and a liquid electrolyte. The liquid electrolyte contains a sultone compound and a nitrile compound, and $1 \leq A/B \leq 10$ is satisfied, where a concentration of the sultone compound in the liquid electrolyte is A mass%, and a concentration of the nitrile compound in the liquid electrolyte is B mass%.

*FIG. 1*

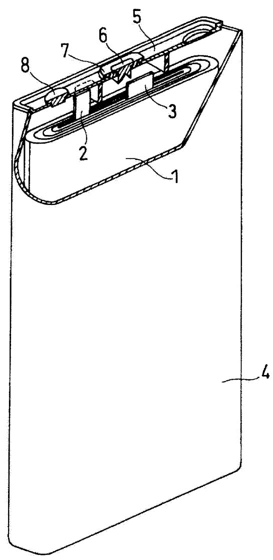


EP 4 300 630 A1

## Description

[Technical Field]

The present disclosure relates to a non-aqueous secondary battery.

[Background Art]

Patent Literature 1 proposes a liquid electrolyte for lithium secondary batteries, including a lithium salt, a non-aqueous organic solvent, fluoroethylene carbonate, a vinyl-containing carbonate, a substituted or unsubstituted $C_2$ to $C_{10}$ cyclic sulfuric acid ester, and an additive containing a dinitrile-based compound. The vinyl-containing carbonate includes vinylene carbonate, vinyl ethylene carbonate, or a combination thereof, and the cyclic sulfuric acid ester includes 1,3-propanesultone, 1,3-propanediol cyclic sulfuric acid ester, or a combination thereof.

Patent Literature 2 proposes a non-aqueous liquid electrolyte including a lithium salt and a non-aqueous solvent in which the lithium salt is dissolved. The non-aqueous liquid electrolyte contains a predetermined carbonate compound, and further contains a compound having a cyano group and/or or a cyclic sulfonic acid ester compound.

[Citation List]

[Patent Literature]

Patent Literature 1: Japanese Patent No. 5414658 (Japanese Laid-Open Patent Publication No. 2011-192632)
Patent Literature 2: Japanese Patent No. 5664056 (Japanese Laid-Open Patent Publication No. 2012-64473)

[Summary of Invention]

[Technical Problem]

In non-aqueous secondary batteries represented by lithium-ion secondary batteries, with an aim to achieve higher capacity of the positive electrode, studies have been made to use a lithium-transition metal composite oxide containing nickel (Ni) for the positive electrode. Conventionally, it has been a mainstream to use cobalt (Co) as a transition metal. In recent years, however, it is attempted to achieve higher capacity of the positive electrode and reduction in costs, by increasing the proportion of Ni in the transition metal and reducing the proportion of expensive Co.

On the other hand, with an aim to achieve higher capacity of the negative electrode, studies have been made to use a silicon (Si)-containing material for the negative electrode. A higher silicon phase content in the Si-containing material is more advantageous for achieving higher capacity.

However, as the proportion of Ni contained in the transition metals in the lithium-transition metal composite oxide is increased, and the proportion of Co is decreased, the side reaction accompanied by the reduction of Ni and the oxidative decomposition of the liquid electrolyte is facilitated, leading to a tendency that the gas generation and the positive electrode resistance (DCIR) increase.

Adding a nitrile compound to the liquid electrolyte can tend to suppress the side reaction at the positive electrode. However, when the negative electrode includes a Si-containing material, the side reaction between the nitrile compound and the silicon phase is facilitated, leading to a tendency that the negative electrode resistance (DCIR) increases.

[Solution to Problem]

One aspect of the present disclosure relates to a non-aqueous secondary battery, including: a positive electrode including a lithium-transition metal composite oxide containing at least nickel as a transition metal; a negative electrode including a silicon-containing material; a separator interposed between the positive electrode and the negative electrode; and a liquid electrolyte, wherein the liquid electrolyte contains a sultone compound and a nitrile compound, and $1 \leq A/B \leq 10$ is satisfied, where a concentration of the sultone compound in the liquid electrolyte is A mass%, and a concentration of the nitrile compound in the liquid electrolyte is B mass%.

[Advantageous Effects of Invention]

According to the present disclosure, the increase in DCIR can be suppressed even when the positive electrode

includes a lithium-transition metal composite oxide containing Ni and the negative electrode includes a Si-containing material.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[FIG. 1] A partially cut-away schematic oblique view of a non-aqueous secondary battery according to one embodiment of the present disclosure.

[Description of Embodiments]

A non-aqueous secondary battery according to the present disclosure includes a positive electrode, a negative electrode, a separator interposed between the positive electrode and the negative electrode, and a liquid electrolyte. The positive electrode includes a composite oxide N as a positive electrode active material. Here, among lithium-transition metal composite oxides, a lithium-transition metal composite oxide containing at least nickel as a transition metal is referred to as the composite oxide N. On the other hand, the negative electrode includes a silicon-containing material as a negative electrode active material.

[Liquid electrolyte]

The liquid electrolyte contains a sultone compound (i.e., a cyclic sulfonic acid ester) and a nitrile compound. Without a nitrile compound in the liquid electrolyte, the side reaction at the positive electrode becomes severe, and the increase in DCIR and gas generation also become severe. When a nitrile compound is contained in the liquid electrolyte, the side reaction at the positive electrode is suppressed. However, the side reaction at the negative electrode becomes severe, ending up in an increase in DCIR. When a sultone compound is further contained in the liquid electrolyte, the sultone compound is decomposed together with the nitrile compound. As a result, a composite coating with favorable quality, in which decomposition products of the nitrile compound and the sultone compound are composited, is formed on the surface of the Si-containing material. When such a composite coating is formed, further decomposition reactions of the nitrile compound and the sultone compound are suppressed.

It is important, however, that the ratio of A to B (A/B) satisfy $1 \leq A/B \leq 10$ where the concentration of the sultone compound in the liquid electrolyte is A mass% and the concentration of the nitrile compound in the liquid electrolyte is B mass%. When the A/B ratio is less than 1, the amount of a component derived from the sultone compound becomes insufficient in the composite coating, and forming a composite coating with favorable quality is difficult, resulting in an increase in DCIR. In order to form a composite coating with favorable quality, it is necessary to set the content of the nitrile compound in the liquid electrolyte to be equal to or higher than the content of the sultone compound. However, when the A/B ratio exceeds 10, the component derived from the sultone compound is contained in excess in the composite coating, and forming a composite coating with favorable quality is difficult. A composite coating formed by adequately controlling the A/B ratio has an appropriate thickness and a well-balanced composition. In particular, it is desirable that the A/B ratio satisfies $2 \leq A/B \leq 5$. Such a composite coating contains a moderate amount of a component derived from the sultone compound and has excellent Li ion conductivity, hardly causing an increase in DCIR. Especially when the state of charge (SOC) is low, the suppression of the increase in DCIR is remarkable.

In the liquid electrolyte contained in the battery in the early stage of charge-discharge cycles or the liquid electrolyte before being injected into the battery, the A value indicating the concentration (mass%) of the sultone compound and the B value indicating the concentration (mass%) of the nitrile compound satisfy, for example, $0.01 \leq A \leq 1.5$ and $0.01 \leq B \leq 1$. When A or B is less than 0.01, a significant effect may be difficult to obtain. On the other hand, when A or B exceeds the upper limit of the above range, side reactions due to the decomposition of the sultone compound or nitrile compound proceed excessively, resulting in severe gas generation and difficulty in forming a composite coating.

The A value may be $0.1 \leq A \leq 1.5$, may be $0.2 \leq A \leq 1.5$, may be $0.5 \leq A \leq 1.5$, and may be $0.5 \leq A \leq 1.0$.

The B value may be $0.01 \leq B \leq 0.8$, may be $0.05 \leq B \leq 0.7$, may be $0.1 \leq B \leq 0.7$, and may be $0.1 \leq B \leq 0.5$.

In a non-aqueous secondary battery, during storage or during charging and discharging, the concentrations of the sultone compound and the nitrile compound in the liquid electrolyte may vary. It suffices therefore that the sultone compound and the nitrile compound remain at a concentration equal to or higher than the detection limit, in the liquid electrolyte collected from the non-aqueous secondary battery. The content of the sultone compound in the liquid electrolyte collected from the non-aqueous secondary battery may be, for example, 0.0001 mass% or more. The content of the nitrile compound in the liquid electrolyte collected from the non-aqueous secondary battery may be, for example, 0.0001 mass% or more. In this case, too, since the A/B ratio reflects the initial A and B values, $1 \leq A/B \leq 10$ (further, 2

≤ A/B ≤ 5) can be satisfied.

The contents of the sultone compound and the nitrile compound in the non-aqueous electrolyte can be obtained, for example, using gas chromatography under the following conditions.

Instrument used: GC-2010 Plus, manufactured by Shimadzu Corporation
Column: HP-1 (membrane thickness: 1 μm, inner diameter: 0.32 mm, length: 60 m), manufactured by J&W Corporation
Column temperature: raised from 50 °C to 90 °C at a temperature rising rate of 5 °C/min and held at 90 °C for 15 minutes, and then, raised from 90 °C to 250 °C at a temperature rising rate of 10 °C/min and held at 250 °C for 15 minutes
Split ratio: 1/50
Linear velocity: 30.0 cm/sec
Inlet temperature: 270 °C
Injection amount: 1 μL
Detector: FID 290 °C (sens. $10^1$)

(Sultone compound)

The sultone compound is a cyclic sulfonic acid ester. The sultone compound may be a compound having a carbon-carbon unsaturated bond (C=C) (hereinafter, an unsaturated sultone compound). The presence of the unsaturated bond can further improve the durability and other properties of the composite coating. The unsaturated bond may be within the ring.

The sultone compound may be, for example, a compound represented by a general formula (1) below.

[Chem. 1]

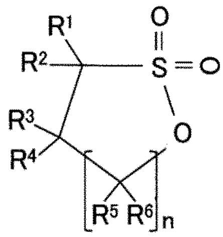

(1)

In the general formula (1), $R^1$ to $R^6$ are each independently a hydrogen atom or a substituent. Examples of the substituent include a halogen atom, a hydrocarbon group, a hydroxyl group, an amino group, and an ester group.

The hydrocarbon group includes an alkyl group, an alkenyl group, and the like. The alkyl group and the alkenyl group may be linear or branched. Examples of the alkyl group include a methyl group, an ethyl group, an n-propyl group, and an isopropyl group. Examples of the alkenyl group include a vinyl group, a 1-propenyl group, and a 2-propenyl group. At least one of the hydrogen atoms in the hydrocarbon group may be substituted by a halogen atom.

In view of ensuring favorable viscosity of the non-aqueous electrolyte and improving the dissolution of the solute, the hydrocarbon group is preferably an alkyl group having one to five carbon atoms, more preferably an alkyl group having one to three carbon atoms.

In the general formula (1), n represents the number of repeating methylene groups each having $R^5$ and $R^6$, and n is an integer of one to three. When n is two or three, the $R^5$ and $R^6$ in each methylene group may be the same as or different from each other.

Examples of the compound represented by the general formula (1) include 1,3-propane sultone (PS), 1,4-butane sultone, 1,5-pentane sultone, 2-fluoro-1,3-propane sultone, 2-fluoro-1,4-butane sultone, and 2-fluoro-1,5-pentane sultone. Preferred among them is PS, in view of its particularly strong interaction with the silicate phase.

The sultone compound may be, for example, a compound (unsaturated sultone compound) represented by a general formula (2) below.

[Chem. 2]

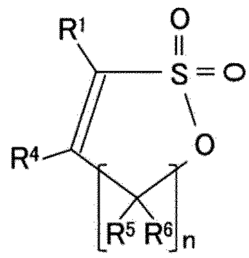

(2)

In the general formula (2), $R^1$, $R^4$, $R^5$, and $R^6$, and n correspond to the $R^1$, $R^4$, $R^5$, and $R^6$, and the n in the general formula (1).

Examples of the compound represented by the general formula (2) include 1,3-propene sultone (PRES), 1,4-butene sultone, 1,5-pentene sultone, 2-fluoro-1,3-propene sultone, 2-fluoro-1,4-butene sultone, and 2-fluoro-1,5-pentene sultone. Preferred among them is PRES in view of its particularly strong interaction with the silicate phase. PRES may account for 50 mass% or more, further 70 mass% or more, or 90 mass% or more of the sultone compound in the liquid electrolyte.

(Nitrile compound)

The nitrile compound may be a mononitrile compound having one nitrile group, may be a dinitrile compound having two nitrile groups, and may be a polynitrile having three or more nitrile groups. The nitrile compound may have five or less nitrile groups, and may have four or less nitrile groups. The nitrile compound may be at least one selected from the group consisting of a mononitrile compound having no hydrogen at the $\alpha$-position of the nitrile group and a dinitrile compound. A nitrile compound having three or more nitrile groups has a tendency to increase the viscosity of the liquid electrolyte. Therefore, a dinitrile having two nitrile groups is desirable.

The properties of the formed composite coating differ depending on the number of the nitrile groups included in the nitrile compound. The dinitrile compound produces a composite coating which is less resistive than that produced from the mononitrile compound, and produces a more homogeneous composite coating than that produced from a trinitrile. Moreover, the dinitrile compound is, even with a small amount, highly capable of forming a composite coating, and is excellent in stability in the battery. The same applies to the mononitrile compound having no hydrogen at the $\alpha$-position of the nitrile group.

Specific examples of the nitrile compound are shown below, but the nitrile compound is not limited to the below. The nitrile compound may be used singly, or in any combination of two or more kinds.

Specific examples of the nitrile compound include pivalonitrile, malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3-dimethylsuccinonitrile, bicyclohexyl-1,1-dicarbonitrile, bicyclohexyl-2,2-dicarbonitrile, bicyclohexyl-3,3-dicarbonitrile, 2,5-dimethyl-2,5-hexanedicarbonitrile, 2,3-diisobutyl-2,3-dimethylsuccinonitrile, 2,2 -diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, 3,3'-(ethylenedithio)dipropionitrile, 3,9-bis(2-cyanoethyl)-2,4,8,10-tetraoxaspiro[5,5]undecane, butanenitrile, and phthalonitrile.

In particular, a compound represented by $NC\text{-}C_mH_{2m}\text{-}CN$ where m is an integer of 1 to 10, a compound having one phenyl group, a mononitrile compound having no hydrogen at the $\alpha$-position of the nitrile group, and the like are easily available. Examples of such compounds include succinonitrile ($NC\text{-}C_2H_4\text{-}CN$), glutaronitrile ($NC\text{-}C_3H_6\text{-}CN$), adiponitrile ($NC\text{-}C_4H_8\text{-}CN$), pimeronitrile ($NC\text{-}C_5H_{10}\text{-}CN$), suberonitrile ($NC\text{-}C_6H_{12}\text{-}CN$), phthalonitrile ($NC\text{-}C_6H_5\text{-}CN$), and pivalonitrile. These may be used singly or in combination of two or more kinds. These compounds may account for 50 mass% or more, further 70 mass% or more, or 90 mass% or more of the nitrile compound in the liquid electrolyte.

(Non-aqueous solvent)

The liquid electrolyte contains a non-aqueous solvent and an electrolyte salt, in addition to the sultone compound and the nitrile compound. Examples of the non-aqueous solvent include cyclic carbonic acid esters, chain carbonic acid

esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL), and γ-valerolactone (GVL). The chain carboxylic acid esters are exemplified by methyl formate, ethyl formate, propyl formate, methyl acetate (MA), ethyl acetate, propyl acetate, methyl propionate, ethyl propionate, and propyl propionate. The liquid electrolyte may contain these non-aqueous solvents singly, or in combination of two or more kinds.

(Electrolyte salt)

As the electrolyte salt, a lithium salt is preferably used. Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$ lithium lower aliphatic carboxylate, LiCl, LiBr, LiI, borates, and imides. Examples of the borates include lithium difluorooxalate borate, and lithium bisoxalate borate. Examples of the imides include lithium bisfluorosulfonyl imide ($LiN(FSO_2)_2$), and lithium bis(trifluoromethanesulfonyl)imide ($LiN(CF_3SO_2)_2$). The liquid electrolyte may contain these electrolyte salts singly or in combination of two or more kinds. The concentration of the electrolyte salt in the liquid electrolyte is, for example, 0.5 mol/L or more and 2 mol/L or less.

The liquid electrolyte may contain another additive. As the other additive, for example, at least one selected from the group consisting of vinylene carbonate, fluoroethylene carbonate (FEC), and vinylethylene carbonate can be used. Especially when the liquid electrolyte contains FEC, a composite coating with more favorable quality can be formed on the surface of the Si-containing material. In the liquid electrolyte, the concentration of FEC may be, for example, 5 mass% or more and 20 mass% or less.

[Negative electrode]

The negative electrode includes a negative electrode active material. Usually, the negative electrode includes a negative electrode current collector, and a layer of a negative electrode mixture (hereinafter, a negative electrode mixture layer) held on the negative electrode current collector. The negative electrode mixture layer can be formed by applying a negative electrode slurry prepared by dispersing constituent components of the negative electrode mixture in a dispersion medium, onto a surface of the negative electrode current collector, followed by drying. The applied film after drying may be rolled as needed.

The negative electrode mixture contains a negative electrode active material as an essential component, and may contain a binder, a thickener, a conductive agent, and the like as optional components.

(Negative electrode active material)

The negative electrode active material includes at least a Si-containing material. The negative electrode active material may further includes another material capable of electrochemically absorbing and releasing lithium ions. An example of such a material is a carbonaceous material. The negative electrode may include metal lithium, a lithium alloy, and the like. The Si-containing material, in the state where lithium ions are absorbed therein, may contain fine lithium alloy.

Examples of the carbonaceous material include graphite, graphitizable carbon (soft carbon), and non-graphitizable carbon (hard carbon). The carbonaceous material may be used singly, or in combination of two or more kinds. In particular, as the carbonaceous material, graphite is preferred because of its excellent stability during charging and discharging and its low irreversible capacity. Examples of the graphite include natural graphite, artificial graphite, and graphitized mesophase carbon particles.

For achieving favorable cycle characteristics and high capacity in a well-balanced manner, it is desirable to use a Si-containing material and a carbonaceous material in combination. The ratio of the Si-containing material to the total of the Si-containing material and the carbonaceous material is, for example, 0.5 mass% or more, may be 1 mass% or more, and may be 2 mass% or more. When more importance is placed on the improvement of cycle characteristics, the ratio of the Si-containing material to the total of the Si-containing material and the carbonaceous material is, for example, 30 mass% or less, may be 20 mass% or less, may be 15 mass% or less, and may be 10 mass% or less.

Examples of the Si-containing material include elementary Si, a silicon alloy, and a silicon compound, and a composite material including a lithium-ion conductive phase and a silicon phase dispersed in the lithium-ion conductive phase. As the lithium-ion conductive phase, for example, at least one selected from the group consisting of a silicon oxide phase, a silicate phase, and a carbon phase may be used. Such a composite material is suitable for imparting a high capacity to the negative electrode, while suppressing direct contact between the silicon phase and the liquid electrolyte. As the Si-containing material, for example, at least one selected from the group consisting of the following first composite material, second composite material, and third composite material may be used.

<First composite material>

The first composite material includes a silicon oxide phase (lithium-ion conductive phase) and a silicon phase dispersed in the silicon oxide phase. The first composite material is superior in that its stability is high and its changes in volume is small among the Si-containing materials. The high stability is considered to be due to the small size of the silicon phase dispersed in the silicon oxide phase, which hinders deep charging. The silicon oxide phase includes relatively many sites that irreversibly trap lithium ions and tends to have a large irreversible capacity among the Si-containing materials. The first composite material can have a larger irreversible capacity than the second composite material. The trapping of lithium ions by the silicon oxide phase is considered also to contribute to enhancing the stability of the structure of the first composite material, and to suppressing the changes in volume.

The first composite material can be obtained, for example, by heating a silicon oxide in a non-oxidizing atmosphere having an inert gas, such as argon, to allow a disproportionation reaction to proceed. In the disproportionation reaction, Si microcrystals can be uniformly produced in the silicon oxide phase. The size of the Si particles produced by the disproportionation reaction is small, and, for example, can be less than 100 nm in average particle diameter, which can be in the range of 5 nm to 50 nm. The principal component of the silicon oxide phase (e.g., 95 to 100 mass%) is silicon dioxide. That is, the first composite material can include a $SiO_2$ phase and a silicon phase dispersed in the $SiO_2$ phase. In this case, the first composite material, as a whole, can be represented by the general formula $SiO_x$. The range of x value is $0 < x < 2$, but is preferably $0.9 \leq x \leq 1.1$, and may be $x = 1$.

The average particle diameter of the first composite material is 1 to 20 μm, preferably 5 to 12 μm. In the above particle diameter range, the stress due to the changes in volume of the Si-containing material during charging and discharging is easily relaxed, and favorable cycle characteristics are likely to be obtained.

<Second composite material>

The second composite material includes a silicate phase (lithium-ion conductive phase) and a silicon phase dispersed in the silicate phase. The silicate phase includes, for example, at least one selected from the group consisting of Group I and Group II elements of the long periodic table. As the Group I and Group II elements of the long-periodic table, for example, lithium (Li), potassium (K), sodium (Na), magnesium (Mg), and calcium (Ca), strontium (Sr), barium (Ba), and the like can be used. Other elements, such as aluminum (Al), boron (B), lanthanum (La), phosphorus (P), zirconium (Zr), and titanium (Ti), may be included. Particularly preferred is a lithium-containing silicate phase (hereinafter sometimes referred to as a lithium silicate phase) because the irreversible capacity is small, and the initial charge-discharge efficiency is high. That is, the second composite material may include a lithium silicate phase and a silicon phase dispersed in the lithium silicate phase. The second composite material including a lithium silicate phase and a silicon phase dispersed in the lithium silicate phase is hereinafter sometimes referred to as LSX.

The lithium silicate phase is an oxide phase containing lithium (Li), silicon (Si), and oxygen (O), and may contain another element. The atomic ratio O/Si of O to Si in the lithium silicate phase is, for example, greater than 2 and less than 4. This is advantageous in terms of stability and lithium ion conductivity. The O/Si is preferably greater than 2 and less than 3. The atomic ratio Li/Si of Li to Si in the lithium silicate phase is, for example, greater than 0 and less than 4. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The lithium silicate phase can have a composition represented by a formula: $Li_{2z}SiO_{2+z}$ where $0 < z < 2$. In view of the stability, the ease of production, and the lithium ion conductivity, z preferably satisfies $0 < z < 1$, and $z = 1/2$ is more preferable.

<Third composite material>

The third composite material includes a carbon phase (lithium-ion conductive phase), and a silicon phase dispersed in the carbon phase (hereinafter, the third composite material is sometimes referred to as a Si-C material). The carbon phase may be constituted of, for example, amorphous carbon. The amorphous carbon may be, for example, hard carbon, soft carbon, or otherwise. An amorphous carbon can be obtained by, for example, sintering a carbon source in an inert atmosphere, and pulverizing the obtained sintered body. The Si-C material can be obtained by, for example, mixing a carbon source and Si particles, stirring the mixture while crushing the mixture in a stirrer, such as a ball mill, and then, baking the mixture in an inert atmosphere. The carbon source that can be used includes, for example, saccharides and water-soluble resins, such as carboxy methylcellulose (CMC), polyvinylpyrrolidone, cellulose, and sucrose. In mixing the carbon source and Si particles, for example, the carbon source and the Si particles may be dispersed in a dispersion medium, such as an alcohol.

The second and third composite materials are superior in that the irreversible capacity is small. This is because the silicate phase and the carbon phase include few sites that irreversibly trap lithium ions. When the second and/or

third composite material is used, excellent charge-discharge efficiency can be obtained. Especially in an early stage of charging and discharging, the effect is remarkable.

The contents of the silicon phase contained in the second composite material and the third composite material may be, each independently, for example, 40 wt% or more, may be 45 wt% or more, may be 50 wt% or more, and may be 65 wt% or more. The content of the silicon phase is, for example, 80 wt% or less, may be 75 wt% or less, may be 70 wt% or less, and may be 65 wt% or less. Within a range with its upper and lower limits selected in any combination from the above, a higher battery capacity and improved cycle characteristics are both likely to be achieved. In the second and third composite materials, unlike the first composite material whose production method is limited, the content of the silicon phase can be changed as desired, which eases the designing of a high-capacity negative electrode.

The content of the Si particles in each Si-containing material (each composite material) can be measured by Si-NMR. Desirable Si-NMR measurement conditions are shown below.

Measuring instrument: Solid nuclear magnetic resonance spectrometer (INOVA-400), manufactured by Varian, Inc.

Probe: Varian 7 mm CPMAS-2
MAS: 4.2 kHz
MAS speed: 4 kHz
Pulse: DD (45° pulse + signal capture time 1H decoupling)
Repetition time: 1200 sec
Observation width: 100 kHz
Observation center: around -100 ppm
Signal capture time: 0.05 sec
Accumulated number of times: 560
Sample amount: 207.6 mg

Usually, the silicon phase dispersed in the silicate phase and/or the carbon phase are constituted of a plurality of crystallites. The crystallite size of the silicon phase is preferably, for example, 30 nm or less. In this case, since the changes in volume due to the expansion and contraction of the silicon phase during charging and discharging can be minimized as possible, the cycle characteristics are further enhanced. The lower limit of the crystallite size is not particularly limited, but is, for example, 5 nm or more. The crystallite size can be calculated using the Scherrer formula from the half width of a diffraction peak belonging to the Si (111) plane in an X-ray diffraction pattern (XRD) of the silicon phase.

The average particle diameters of the second and third composite materials may be, each independently, 1 to 20 μm, and may be 5 to 12 μm. In the above particle diameter range, the stress due to the changes in volume of the Si-containing material during charging and discharging can be easily relaxed, and favorable cycle characteristics are likely to be obtained. The average particle diameter of each Si-containing material (each composite material) means a particle diameter at 50% cumulative volume (volume average particle diameter) in a particle size distribution measured by a laser diffraction and scattering method. As the measuring instrument, for example, "LA-750", manufactured by Horiba, Ltd. (HORIBA) can be used.

The composition of the composite material can be analyzed, for example, as follows. First, the battery is dismantled, to take out the negative electrode, which is then washed with a non-aqueous solvent, such as ethylene carbonate, and dried. This is followed by processing with a cross section polisher (CP) for obtaining a cross section of the negative electrode mixture layer, to prepare a sample. A field emission scanning electron microscope (FE-SEM) is used to give a backscattered electron image of a sample cross section, to observe the cross section of a composite particle. Then, using an Auger electron spectroscopy (AES) analyzer, qualitative and quantitative analysis of elements is performed (acceleration voltage: 10 kV, beam current: 10 nA) with respect to the observed second composite material.

As the binder for the negative electrode, for example, a resin material is used. Examples of the binder include fluorocarbon resins, polyolefin resins, polyamide resins, polyimide resins, acrylic resins, vinyl resins, and rubbery materials (e.g., styrene-butadiene copolymer (SBR)). The binder may be used singly, or in combination of two or more kinds.

As the thickener, for example, a cellulose derivative, such as cellulose ethers, can be used. Examples of the cellulose derivative include carboxymethyl cellulose (CMC) and modified products thereof, and methyl cellulose. The thickener may be used singly, or in combination of two or more kinds.

Examples of the conductive material include carbon nanotubes (CNTs), carbon fibers other than CNTs, and conductive particles (e.g., carbon black, graphite).

The dispersion medium used for the negative electrode slurry includes, but is not limited to, for example, water, an alcohol, N-methyl-2-pyrrolidone (NMP), and mixed solvents thereof.

For the negative electrode current collector, for example, a metal foil can be used. The negative electrode current collector may be porous. The material of the negative electrode current collector may be, for example, stainless steel, nickel, a nickel alloy, copper, a copper alloy, and the like. The thickness of the negative electrode current collector

is, for example, 1 to 50 μm, and may be 5 to 30 μm, but is not limited thereto.

[Positive electrode]

The positive electrode includes a positive electrode active material. Usually, the positive electrode includes a positive electrode current collector, and a layer of a positive electrode mixture (hereinafter, a "positive electrode mixture layer") held on the positive electrode current collector. The positive electrode mixture layer can be formed by applying a positive electrode slurry prepared by dispersing constituent components of the positive electrode mixture in a dispersion medium, onto a surface of the positive electrode current collector, followed by drying. The applied film after drying may be rolled as needed. The positive electrode mixture contains a positive electrode active material as an essential component, and may contain a binder, a thickener, and the like as optional components.

(Positive electrode active material)

The positive electrode active material may be any material that can be used as a positive electrode active material for non-aqueous secondary batteries (especially lithium-ion secondary batteries), but in view of achieving higher capacity, includes a lithium-transition metal composite oxide containing at least nickel as a transition metal (composite oxide N). The proportion of the composite oxide N in the positive electrode active material is, for example, 70 mass% or more, may be 90 mass% or more, and may be 95 mass% or more.

The composite oxide N may be, for example, a lithium-transition metal composite oxide having a layered rock-salt type structure and containing Ni and at least one selected from the group consisting of Co, Mn, and Al. Hereinafter, a lithium-transition metal composite oxide having a layered rock-salt type structure and containing Ni and at least one selected from the group consisting of Co, Mn, and Al, in which the proportion of Ni in the metal elements other than Li is 80 atm% or more is sometimes referred to as a "composite oxide HN". The proportion of the composite oxide HN in the composite oxide N used as the positive electrode active material is, for example, 90 mass% or more, may be 95 mass% or more, and may be 100%.

The higher the proportion of Ni is, the more the lithium ions can be extracted from the composite oxide HN during charging, and the capacity can be increased. However, Ni in the composite oxide HN with increased capacity has a tendency to have a higher valence. Also, when the proportion of Ni is increased, the proportions of other elements are relatively decreased. In this case, the crystal structure tends to become unstable, and side reactions tend to occur with repeated charging and discharging. At the particle surface of the composite oxide HN with high Ni content, the crystal structure of Ni tends to change into one that can hardly reversibly absorb and release lithium ions.

In the non-aqueous secondary battery according to the present disclosure, despite the use of a composite oxide HN with such a high Ni content for the positive electrode and the use of a Si-containing material for the negative electrode, the increase in DCIR can be suppressed by using a liquid electrolyte containing a sultone compound and a nitrile compound.

The positive electrode and the negative electrode may be designed such that $1 \leq D/C \leq 1.9$, and further, $1.5 \leq D/C \leq 1.9$ are satisfied, where the content of the silicon phase in the silicon-containing material of the negative electrode is C mass%, and the content of nickel relative to all metals other than lithium contained in the composite oxide N is D mol%. In this case, without a nitrile compound in the liquid electrolyte, the side reaction accompanied by the reduction of Ni and the oxidative decomposition of the liquid electrolyte becomes severe, leading to an increased tendency that the gas generation and the positive electrode resistance (DCIR) increase. Without a sultone compound in the liquid electrolyte, even when a nitrile compound is contained in the liquid electrolyte, the side reaction at the negative electrode becomes severe, leading to an increased tendency that the gas generation and the negative electrode resistance (DCIR) increase. Despite this, when the A/B ratio is controlled within the above range, the DCIR can be reduced even when $1 \leq D/C \leq 1.9$ is satisfied, and the increase in DCIR that may occur especially when the state of charge is low (SOC is low) is remarkably suppressed.

The positive electrode and the negative electrode may be designed such that $0 \leq E/C \leq 0.1$ is satisfied, where the content of the silicon phase in the silicon-containing material is C mass%, and the content of cobalt relative to all metals other than lithium contained in the composite oxide N is E mol%. In this case, since the crystal structure of the composite oxide N tends to be unstable, controlling the A/B ratio within the above range is highly effective, and the effect of reducing the DCIR tends to be apparent.

Co, Mn, and Al contribute to stabilizing the crystal structure of the composite oxide HN with high Ni content. However, a lower Co content is desirable in view of the reduction in manufacturing costs. The composite oxide HN with low Co content (or free of Co) may contain Mn and Al.

The proportion of Co in the metal elements other than Li is desirably 10 atm% or less, more desirably 5 atm% or less, and may be free of Co. In view of stabilizing the crystal structure of the composite oxide HN, it is desirable to contain 1 atm% or more or 1.5 atm% or more of Co.

The proportion of Mn in the metal elements other than Li may be 10 atm% or less, and may be 5 atm% or less. The proportion of Mn in the metal elements other than Li may be 1 atm% or more, may be 3 atm% or more, and may be 5 atm% or more. When defining a range, these upper and lower limits can be combined in any combination.

The proportion of Al in the metal elements other than Li may be 10 atm% or less, and may be 5 atm% or less. The proportion of Al in the metal elements other than Li may be 1 atm% or more, may be 3 atm% or more, and may be 5 atm% or more. When defining a range, these upper and lower limits can be combined in any combination.

The composite oxide HN is, for example, represented by a formula: $Li_{\alpha}Ni_{(1-x1-x2-y-z)}Co_{x1}Mn_{x2}Al_{y}M_{z}O_{2+\beta}$. The element M is an element other than Li, Ni, Co, Mn, Al, and oxygen.

In the above formula, the $\alpha$ representing the atomic ratio of lithium is, for example, $0.95 \leq \alpha \leq 1.05$. The $\alpha$ increases and decreases during charging and discharging. In the $(2+\beta)$ representing the atomic ratio of oxygen, $\beta$ satisfies $-0.05 \leq \beta \leq 0.05$.

The 1-x1-x2-y-z (= v) representing the atomic ratio of Ni is, for example, 0.8 or more, may be 0.85 or more, may be 0.90 or more, and may be 0.95 or more. The v representing the atomic ratio of Ni may be 0.98 or less, and may be 0.95 or less. When defining a range, these upper and lower limits can be combined in any combination.

The x1 representing the atomic ratio of Co is, for example, 0.1 or less ($0 \leq x1 \leq 0.1$), may be 0.08 or less, may be 0.05 or less, and may be 0.01 or less. When x1 is 0, this encompasses a case where Co is below the detection limit.

The x2 representing the atomic ratio of Mn is, for example, 0.1 or less ($0 \leq x2 \leq 0.1$), may be 0.08 or less, may be 0.05 or less, and may be 0.03 or less. The x2 may be 0.01 or more, and may be 0.03 or more. Mn contributes to stabilizing the crystal structure of the composite oxide HN, and containing Mn, which is inexpensive, in the composite oxide HN is advantageous for cost reduction. When defining a range, these upper and lower limits can be combined in any combination.

The y representing the atomic ratio of Al is, for example, 0.1 or less ($0 \leq y \leq 0.1$), may be 0.08 or less, may be 0.05 or less, and may be 0.03 or less. The y may be 0.01 or more, and may be 0.03 or more. Al contributes to stabilizing the crystal structure of the composite oxide HN. When defining a range, these upper and lower limits can be combined in any combination.

The z representing the atomic ratio of the element M is, for example, $0 \leq z \leq 0.10$, may be $0 < z \leq 0.05$, may be $0.001 \leq z \leq 0.01$.

The element M may be at least one selected from the group consisting of Ti, Zr, Nb, Mo, W, Fe, Zn, B, Si, Mg, Ca, Sr, Sc, and Y. In particular, when at least one selected from the group consisting of Nb, Sr, and Ca is contained in the composite oxide HN, it can be seen that the surface structure of the composite oxide HN is stabilized, the resistance is reduced, and the leaching of metal is further suppressed. It is more effective when the element M is localized near the particle surfaces of the composite oxide HN.

The contents of the elements constituting the composite oxide N can be measured using an inductively coupled plasma atomic emission spectroscopy (ICP-AES), an electron probe microanalyzer (EPMA), an energy dispersive X-ray spectroscopy (EDX), or the like.

The composite oxide N is, for example, secondary particles formed of an aggregate of primary particles. The particle diameter of the primary particles is, for example, 0.05 μm or more and 1 μm or less. The average particle diameter of the secondary particles of the composite oxide N is, for example, 3 μm or more and 30 μm or less, and may be 5 μm or more and 25 μm or less.

In the present specification, the average particle diameter of the secondary particles means a particle diameter at 50% cumulative volume (volume average particle diameter) in a particle size distribution measured by a laser diffraction and scattering method. Such a particle diameter is sometimes referred to as D50. As the measuring instrument, for example, "LA-750", manufactured by Horiba, Ltd. (HORIBA) can be used.

As the binder of the positive electrode, for example, a resin material is used. Examples of the binder include fluorocarbon resins, polyolefin resins, polyamide resins, polyimide resins, acrylic resins, and vinyl resins. The binder may be used singly or in combination of two or more kinds.

As the conductive material, for example, carbon nanotubes (CNTs), conductive fibers other than CNTs, and conductive particles (e.g., carbon black, graphite) are exemplified.

As the dispersion medium used in the positive electrode slurry, although not particularly limited, for example, water, an alcohol, N-methyl-2-pyrrolidone (NMP), and mixed solvents thereof are exemplified.

As the positive electrode current collector, for example, a metal foil can be used. The positive electrode current collector may be porous. Examples of the porous current collector include a net, a punched sheet, and an expanded metal. The material of the positive electrode current collector may be, for example, stainless steel, aluminum, an aluminum alloy, and titanium. Although not particularly limited, the thickness of the positive electrode current collector is, for example, 1 to 50 μm, and may be 5 to 30 μm.

[Separator]

It is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. As the material of the separator, a polyolefin, such as polypropylene and polyethylene, is preferred.

In an exemplary structure of the non-aqueous secondary battery, an electrode group formed by winding the positive electrode and the negative electrode with the separator interposed therebetween is housed together with the liquid electrolyte in an outer body. However, without limited thereto, an electrode group in a different form may be adopted. For example, the electrode group may be of a stacked type formed by stacking the positive electrode and the negative electrode with the separator interposed therebetween. The type of the battery is also not particularly limited, and may of a cylindrical, prismatic, coin, button, or laminate type.

In the following, the structure of a prismatic non-aqueous secondary battery as an example of the non-aqueous secondary battery according to the present invention will be described with reference to FIG. 1.

The battery includes a bottomed prismatic battery case 4, and an electrode group 1 and a liquid electrolyte housed in the battery case 4. The electrode group 1 has a long negative electrode, a long positive electrode, and a separator interposed between the positive electrode and the negative electrode. A negative electrode current collector of the negative electrode is electrically connected, via a negative electrode lead 3, to a negative electrode terminal 6 provided on a sealing plate 5. The negative electrode terminal 6 is electrically insulated from the sealing plate 5 by a gasket 7 made of resin. A positive electrode current collector of the positive electrode is electrically connected, via a positive electrode lead 2, to the back side of the sealing plate 5. That is, the positive electrode is electrically connected to the battery case 4 serving as a positive electrode terminal. The periphery of the sealing plate 5 is engaged with the opening end of the battery case 4, and the engaging portion is laser-welded. The sealing plate 5 is provided with an injection port for non-aqueous electrolyte, which is closed with a sealing plug 8 after electrolyte injection.

The present disclosure will be more specifically described below with reference to Examples and Comparative Examples, but the present invention is not limited to the following Examples.

«Examples 1 to 7 and Comparative Examples 1 to 3»

A non-aqueous secondary battery was fabricated and evaluated in the following procedure.

(1) Production of positive electrode

As the positive electrode active material, $LiNi_{0.91}Co_{0.04}Al_{0.05}O_2$ as the composite oxide HN was used (D = 91, E = 4). An amount of 100 parts by mass of the composite oxide HN (average particle diameter 12 μm) was mixed with 1 part by mass of carbon nanotubes, 1 part by mass of polyvinylidene fluoride, and an appropriate amount of NMP, to prepare a positive electrode slurry. Next, the positive electrode slurry was applied onto both surfaces of an aluminum foil, and the applied films were dried, and then rolled, to form a positive electrode mixture layer on each of both surfaces of the aluminum foil. A positive electrode was thus obtained.

(2) Production of negative electrode

A silicon-containing material (average particle diameter 5 μm) and graphite (average particle diameter 20 μm) were mixed in a mass ratio of 5:95, to obtain a negative electrode active material. The silicon-containing material used here was a composite material (LSX) including a lithium silicate phase ($Li_2Si_2O_5$) and a silicon phase dispersed in the lithium silicate phase. The silicon content in the LSX was set to 55 mass% (C = 55, D/C = 1.65, E/C = 0.07). An amount of 98 parts by mass of the negative electrode active material was mixed with 1 part by mass of sodium salt of CMC (CMC-Na), 1 part by mass of SBR, and an appropriate amount of water, to prepare a negative electrode slurry. Next, the negative electrode slurry was applied onto both surfaces of a copper foil serving as a negative electrode current collector, and the applied films were dried, and then rolled, to form a negative electrode mixture layer on each of both surfaces of the copper foil. A negative electrode was thus obtained.

(3) Preparation of liquid electrolyte

A liquid electrolyte was prepared by dissolving $LiPF_6$ in a mixed solvent of FEC, EC, EMC, and DMC (FEC:EC:EMC:DMC = 10:5:5:80 (ratio by volume)), and further dissolving a sultone compound below and a nitrile compound below so that the contents thereof were as shown in Table 1. The concentration of $LiPF_6$ in the liquid electrolyte was set to 1.3 mol/L. The contents of the sultone compound and the nitrile compound in the liquid electrolyte are initial

concentrations thereof in the liquid electrolyte immediately after preparation.

The sultone compound and the nitrile compound shown in Table 1 are as below.

<Sultone compound (compound A)>

PRES: 1,3-propene sultone

<Nitrile compound (compound B)>

t-BCN: pivalonitrile (tert-$C_4H_9$-CN)
ScCN: succinonitrile (NC-$C_2H_4$-CN)
AdCN: adiponitrile (NC-$C_4H_8$-CN)

(4) Fabrication of battery

A positive electrode lead made of aluminum was attached at its one end to the positive electrode. A negative electrode lead made of nickel was attached at its end to the negative electrode. The positive electrode and the negative electrode were wound with a separator made of polyethylene interposed therebetween, to form an electrode group. The electrode group was dried under vacuum at 105 °C for 2 hours, and then, housed in a bottomed cylindrical battery case serving as a negative electrode terminal. The battery case used here was made of iron. Next, after the liquid electrolyte was injected into the battery case, the opening of the battery case was closed with a sealing member made of metal serving as a positive electrode terminal. At this time, a gasket made of resin was interposed between the sealing member and the opening end of the battery case. The other end of the positive electrode lead was connected to the sealing body, and the other end of the negative electrode lead was connected to the inner bottom surface of the battery case. In this way, a 18650-type cylindrical lithium-ion secondary battery was fabricated. In Table 1, A1 to A7 are the batteries of Examples 1 to 7, and B1 to B3 are the batteries of Comparative Examples 1 to 3.

(5) Evaluation

<Initial DCIR>

In a 25 °C temperature environment, the battery was constant-current charged at a current of 0.2 It until the voltage reached 4.2 V, and then constant-voltage charged at a constant voltage of 4.2 V until the current reached 0.02 It. This was followed by a rest for 20 minutes. In this way, a battery at SOC 100% was obtained. The obtained battery at SOC 100% was discharged at a constant current of 0.3 It until the state of charge (SOC) reached 10%. With respect to the battery at SOC 10%, the voltage values when discharged for 10 seconds at each of the current values of 0 A, 0.1 A, 0.5 A, and 1.0 A were measured. The relationship between the discharge current values and the voltage values after 10 seconds was linearly approximated by a least squares method, and from the absolute value of a slope of the line, an initial DCIR was calculated.

<Charge-discharge cycle>

The battery after measurement of initial DCIR was subjected to 100 charge-discharge cycles under the following conditions.

<Charge>

In a 25 °C environment, the battery was charged at a constant current of 0.2 It until the voltage reached 4.2 V, and then charged at a constant voltage of 4.2 V until the current reached 0.02 It. The battery subjected to constant-voltage charging was rested for 20 minutes.

<Discharge>

After the rest, in a 25 °C environment, the battery was discharged at a constant current of 0.3 It until the voltage reached 2.5 V.

<Percentage increase in DCIR>

With respect to the battery after 100 cycles, a DCIR(100) was determined in the same manner as determining the initial DCIR, and the percentage increase in DCIR was calculated from the following formula.

$$\text{Percentage increase in DCIR (\%)} = 100 \times (\text{DCIR(100)} - \text{initial DCIR}) / \text{initial DCIR}$$

<<Comparative Example 4»

A battery B4 was fabricated in the same manner as in Example 1, except that, as the negative electrode active material, the silicon-containing material was not used (C = 0), and only graphite (average particle diameter 20 μm) was used.

<<Comparative Example 5»

A battery B5 was fabricated in the same manner as in Comparative Example 1, except that, as the negative electrode active material, the silicon-containing material was not used (C=0), and only graphite (average particle diameter 20 μm) was used.

[Table 1]

| | Compound A | Compound B | A (mass%) | B (mass%) | A/B | D/C | E/C | Percentage increase in DCIR |
|---|---|---|---|---|---|---|---|---|
| A1 | PRES | t-BCN | 1.0 | 0.2 | 5 | 1.65 | 0.07 | +18% |
| A2 | PRES | t-BCN | 0.5 | 0.2 | 2.5 | 1.65 | 0.07 | +22% |
| A3 | PRES | t-BCN | 1.0 | 0.5 | 2 | 1.65 | 0.07 | +19% |
| A4 | PRES | AdCN | 1.0 | 0.2 | 5 | 1.65 | 0.07 | +22% |
| A5 | PRES | ScCN | 1.0 | 0.2 | 5 | 1.65 | 0.07 | +19% |
| A6 | PRES | t-BCN | 1.0 | 0.8 | 1.25 | 1.65 | 0.07 | +20% |
| A7 | PRES | t-BCN | 1.0 | 0.1 | 10 | 1.65 | 0.07 | +18% |
| B1 | - | AdCN | 0 | 0.5 | 0 | 1.65 | 0.07 | +30% |
| B2 | PRES | AdCN | 0.2 | 0.5 | 0.4 | 1.65 | 0.07 | +28% |
| B3 | PRES | AdCN | 0.5 | 1.0 | 0.5 | 1.65 | 0.07 | +31% |
| B4 | PRES | AdCN | 1.0 | 0.2 | 5 | ∞ | ∞ | +8% |
| B5 | - | AdCN | 0 | 0.5 | 0 | ∞ | ∞ | +10% |

Table 1 shows that even when a nitrile compound was used in order to suppress an increase in DCIR and gas generation at the positive electrode, the percentage increase in DCIR was extremely high in the battery B 1 in which the sultone compound was not used. Moreover, even when the sultone compound was used, almost no effect was obtained in suppressing the percentage increase in DCIR in the batteries B2 and B3 in which the A/B ratio did not satisfy $1 \leq A/B \leq 10$. On the other hand, in the batteries A1 to A7 satisfying $1 \leq A/B \leq 10$ or $2 \leq A/B \leq 5$, the percentage increase in DCIR was remarkably suppressed. As compared to the percentage increase in DCIR of 30% in the battery B 1 in which the sultone compound was not used, the percentage increase in DCIR in the batteries A1 to A7 was improved by 10% or more. On the other hand, when only graphite was used as the negative electrode active material, the difference in percentage increase in DCIR was very small between the battery B4 in which the sultone compound was used and the battery B5 in which the sultone compound was not used. Based on the foregoing, it can be understood that the increase in negative electrode resistance (DCIR) associated with using a nitrile compound is a specific problem that occurs when the negative electrode contains a Si-containing material.

[Industrial Applicability]

The non-aqueous secondary battery according to the present disclosure is suitably applicable as a main power source for mobile communication devices, portable electronic devices, a power source for in-vehicle use, and the like. The application, however, is not limited to these.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A non-aqueous secondary battery, comprising:

   a positive electrode including a lithium-transition metal composite oxide containing at least nickel as a transition metal;
   a negative electrode including a silicon-containing material;
   a separator interposed between the positive electrode and the negative electrode; and
   a liquid electrolyte, wherein
   the liquid electrolyte contains a sultone compound and a nitrile compound, and

   $$1 \leq A/B \leq 10$$

   is satisfied,
   where a concentration of the sultone compound in the liquid electrolyte is A mass%, and a concentration of the nitrile compound in the liquid electrolyte is B mass%.

2. The non-aqueous secondary battery according to claim 1, wherein

   $$2 \leq A/B \leq 5$$

   is satisfied.

3. The non-aqueous secondary battery according to claim 1 or 2, wherein

   $$0.01 \leq A \leq 1.5,$$

   and

   $$0.01 \leq B \leq 1$$

   are satisfied.

4. The non-aqueous secondary battery according to any one of claims 1 to 3, wherein the sultone compound has an unsaturated bond.

5. The non-aqueous secondary battery according to any one of claims 1 to 4, wherein the nitrile compound is at least

one selected from the group consisting of a mononitrile compound and a dinitrile compound, and the mononitrile compound has no hydrogen at an $\alpha$-position of the nitrile group.

**6.** The non-aqueous secondary battery according to any one of claims 1 to 5, wherein

the liquid electrolyte further contains fluoroethylene carbonate, and
in the liquid electrolyte, a concentration of the fluoroethylene carbonate is 5 mass% or more and 20 mass% or less.

**7.** The non-aqueous secondary battery according to any one of claims 1 to 6, wherein

the silicon-containing material includes a lithium-ion conductive phase, and a silicon phase dispersed in the lithium-ion conductive phase, and

$$1 \leq D/C \leq 1.9$$

is satisfied,
where a content of the silicon phase in the silicon-containing material is C mass%, and a content of nickel relative to all metals other than lithium contained in the lithium-transition metal composite oxide is D mol%.

**8.** The non-aqueous secondary battery according to claim 7, wherein

$$1.5 \leq D/C \leq 1.9$$

is satisfied.

**9.** The non-aqueous secondary battery according to claim 7 or 8, wherein

the lithium-transition metal composite oxide further contains at least one selected from the group consisting of Co, Mn, and Al, and

$$0 \leq E/C \leq 0.1$$

is satisfied,
where a content of cobalt relative to all metals other than lithium contained in the lithium-transition metal composite oxide is E mol%.

FIG. 1

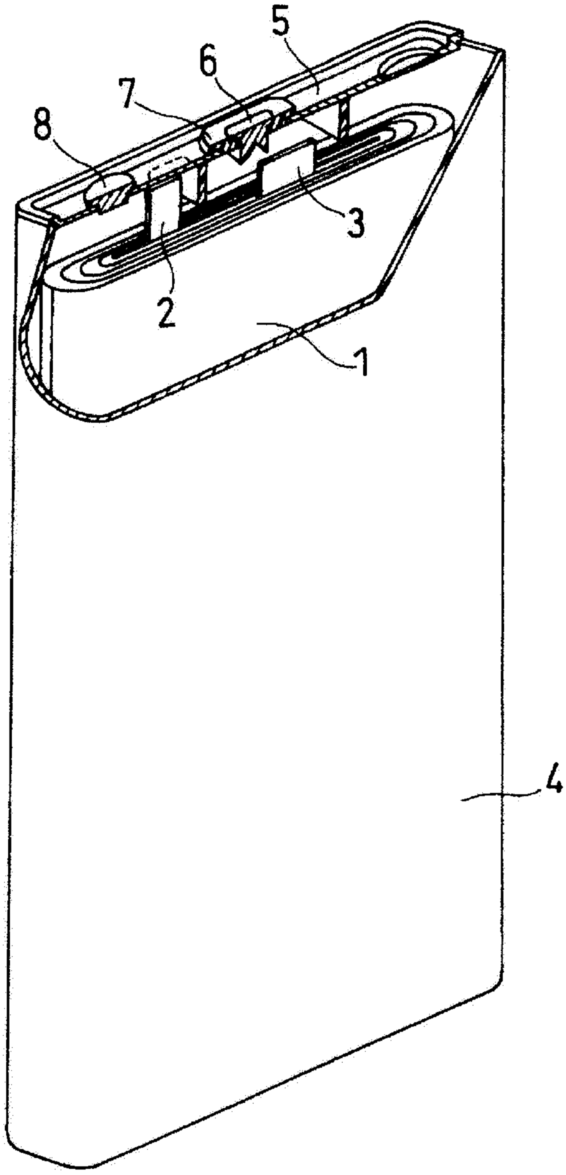

## INTERNATIONAL SEARCH REPORT

International application No.
**PCT/JP2022/005485**

**A. CLASSIFICATION OF SUBJECT MATTER**

***H01M 4/38***(2006.01)i; ***H01M 4/485***(2010.01)i; ***H01M 4/505***(2010.01)i; ***H01M 4/525***(2010.01)i; ***H01M 10/052***(2010.01)i; ***H01M 10/0567***(2010.01)i
FI: H01M10/052; H01M4/38 Z; H01M4/525; H01M10/0567; H01M4/485; H01M4/505

According to International Patent Classification (IPC) or to both national classification and IPC

**B. FIELDS SEARCHED**

Minimum documentation searched (classification system followed by classification symbols)

H01M4/38; H01M4/485; H01M4/505; H01M4/525; H01M10/052; H01M10/0567

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-048624 A (HITACHI MAXELL) 07 April 2016 (2016-04-07)<br>claim 1, example 9, table 1 | 1-3<br>6 |
| X<br>Y | JP 2012-195223 A (MITSUBISHI CHEMICALS CORP) 11 October 2012 (2012-10-11)<br>claim 1, example 11, table 1 | 1, 3-5<br>6 |
| Y | JP 2011-192632 A (SAMSUNG SDI CO LTD) 29 September 2011 (2011-09-29)<br>examples 3-4 | 6 |
| A | JP 2010-245020 A (SAMSUNG SDI CO LTD) 28 October 2010 (2010-10-28)<br>entire text, all drawings | 1-9 |
| A | JP 2013-093322 A (DAIKIN IND LTD) 16 May 2013 (2013-05-16)<br>entire text, all drawings | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/005485**

**C. DOCUMENTS CONSIDERED TO BE RELEVANT**

| Category* | Citation of document, with indication, where appropriate, of the relevant passages | Relevant to claim No. |
|---|---|---|
| A | JP 2016-143449 A (MITSUBISHI CHEMICALS CORP) 08 August 2016 (2016-08-08) entire text, all drawings | 1-9 |
| A | WO 2020/153822 A1 (LG CHEM, LTD.) 30 July 2020 (2020-07-30) entire text, all drawings | 1-9 |
| A | WO 2018/123751 A1 (PANASONIC IP MAN CO LTD) 05 July 2018 (2018-07-05) entire text, all drawings | 1-9 |
| A | JP 2007-059213 A (TOSHIBA CORP) 08 March 2007 (2007-03-08) entire text, all drawings | 1-9 |

Form PCT/ISA/210 (second sheet) (January 2015)

**INTERNATIONAL SEARCH REPORT**
**Information on patent family members**

International application No.
**PCT/JP2022/005485**

| Patent document cited in search report | Publication date (day/month/year) | Patent family member(s) | Publication date (day/month/year) |
|---|---|---|---|
| JP 2016-048624 A | 07 April 2016 | (Family: none) | |
| JP 2012-195223 A | 11 October 2012 | (Family: none) | |
| JP 2011-192632 A | 29 September 2011 | US 2011/0229770 A1<br>examples 3-4<br>EP 2367230 A1<br>KR 10-2011-0104391 A | |
| JP 2010-245020 A | 28 October 2010 | US 2010/0255369 A1<br>entire text, all drawings<br>EP 2237359 A2<br>KR 10-2010-0109709 A | |
| JP 2013-093322 A | 16 May 2013 | US 2014/0242475 A1<br>entire text, all drawings<br>WO 2013/051635 A1<br>EP 2765642 A1 | |
| JP 2016-143449 A | 08 August 2016 | (Family: none) | |
| WO 2020/153822 A1 | 30 July 2020 | EP 3790084 A1<br>entire text, all drawings<br>KR 10-2020-0092202 A | |
| WO 2018/123751 A1 | 05 July 2018 | US 2020/0091500 A1<br>entire text, all drawings<br>CN 110100347 A | |
| JP 2007-059213 A | 08 March 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5414658 B
- JP 2011192632 A
- JP 5664056 B
- JP 2012064473 A